(19) Europäisches Patentamt

European Patent Office

Office européen des brevets

(11) **EP 1 306 748 A2**

(12) **EUROPEAN PATENT APPLICATION**

(43) Date of publication:
**02.05.2003 Bulletin 2003/18**

(51) Int Cl.[7]: **G06F 7/72**

(21) Application number: **02023692.3**

(22) Date of filing: **22.10.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | (72) Inventors:<br>• **Nakano, Toshihisa**<br>  **Osaka-fu 572-0077 (JP)**<br>• **Matsuzaki, Natsume**<br>  **Osaka-fu 562-0023 (JP)**<br>• **Ono, Takatoshi Trusty Jimokuji 2-303**<br>  **Ama-gun Aichi-ken 490-1111 (JP)** |
| (30) Priority: **24.10.2001 JP 2001326869** | |
| (71) Applicant: **Matsushita Electric Industrial Co., Ltd.**<br>**Kadoma-shi Osaka-fu, 571 (JP)** | (74) Representative: **Grünecker, Kinkeldey, Stockmair & Schwanhäusser Anwaltssozietät**<br>**Maximilianstrasse 58**<br>**80538 München (DE)** |

(54) **Modular squaring circuit, modular squaring method, and modular squaring program**

(57) A fast computation method for squaring operations in Montgomery multiplication, and an arithmetic circuit for realizing the computation method are provided. A modular squaring unit compares variable $i$ with variable $j$. If $i$ and $j$ are equal, the modular squaring unit computes $T=T+a_i \times a_i \times 2^{ik}$. If $i$ and $j$ are not equal, the modular squaring unit computes temporary variable $tmp=a_i \times a_j \times 2^{jk}$, shifts temporary variable $tmp$ by one bit to the left, and computes $T=T+tmp$.

FIG.1

1 CRYPTOGRAPHIC COMMUNICATION SYSTEM

## Description

This application is based on an application No. 2001-326869 filed in Japan, the contents of which are hereby incorporated by reference.

## BACKGROUND OF THE INVENTION

### Field of the Invention

The present invention relates to encryption techniques for maintaining the security of information, and in particular relates to modular exponentiation used in public key cryptography.

### Related Art

In recent years, public key cryptography is widely used for purposes such as secret communication of information and authentication of individuals. Public key cryptography especially contributes to improved security of information communicated via the Internet and information recorded on recording media such as IC cards.

As a result, techniques that use public key cryptography are employed in a variety of platforms today, ranging from PCs (personal computers), PDAs (personal digital assistants), and mobile phones that communicate via the Internet to recording media such as IC cards.

The RSA (Rivest-Shamir-Adleman) cryptosystem is one type of public key cryptography. In the RSA cryptosystem, modular exponentiation is performed as a main operation. Currently, integers of *1024* bits in length are used as exponents and the like, for maintaining security. This means much processing time is required for encryption and decryption.

A binary method described in D.E. Knuth (1981) "Seminumerical Algorithms" *The Art of Computer Programming,* vol.2 is conventionally known as a modular exponentiation algorithm.

When some exponent $E$ is expressed in binary as $e_{n-1}, e_{n-2}, \ldots, e_1, e_0$ ($e_i$ being *0* or *1*), the binary method performs $n-1$ modular squarings and the number of modular multiplications equivalent to the number of ones in $e_{n-1}, e_{n-2}, \ldots, e_1, e_0$, to find a modular exponentiation value. For example, $A^E$ is computed as follows. The value of $e_i$ is checked in descending order from $i=n-1$. If and only if $e_i=1$, a modular multiplication is performed. Meanwhile, a modular squaring is performed each time regardless of whether $e_i$ is *1* or *0.*

In such a modular exponentiation operation that repeatedly performs multi-precision modular multiplication and modular squaring, the single-precision Montgomery multiplication algorithm is known for efficient modular multiplication. The single-precision Montgomery multiplication algorithm is the following. Let $A,$ $B, N$ be positive integers which are input values (where $0 \leq A < N,$ $0 \leq B < N$), and $L$ be the bit length of $N$ written in binary. This being so, for number $n$ such that $n \geq L,$ $T = AB2^{-n} \bmod N$ is output. When $A, B,$ and $N$ are expressed in base $2^k$ with $h$ digits, in general $n = hk$ is chosen.

However, in platforms such as IC cards that have strict limitations on hardware scale, there is a strong need for both smaller encryption circuitry and faster encryption processing. In platforms that do not have such strict hardware scale limitations, there is still a need for faster encryption processing.

## SUMMARY OF THE INVENTION

To meet the above need, the present invention aims to provide a modular squaring circuit, modular squaring method, modular squaring program, and storage medium storing the modular squaring program that achieve higher computational efficiency. The present invention also aims to provide an encryption device and decryption device which are each equipped with the modular squaring circuit, and a secret communication system which is made up of the encryption device and the decryption device.

The stated object can be fulfilled by a modular squaring circuit for performing modular squaring on a number, including: a multiplication unit operable to multiply a digit in one digit place of the number by a digit in another digit place of the number, thereby obtaining a product; and a doubling unit operable to double the product.

The stated object can also be fulfilled by a modular squaring circuit for performing modular squaring on a number that is expressed by $n$ digits, $n$ being an integer no smaller than 2, including: a squaring unit operable to square each of the $n$ digits of the number, thereby obtaining $n$ squares; a multiplication unit operable to multiply, for each of the $n$ digits of the number, the digit by each more significant digit of the number, thereby obtaining $(n^2-n)/2$ products; a doubling unit operable to double each of the $(n^2-n)/2$ products, thereby obtaining $(n^2-n)/2$ double values; and a computation unit operable to add the $n$ squares and the $(n^2-n)/2$ double values together for corresponding digit places, thereby obtaining a modular square of the number.

According to these constructions, two digits in different places are multiplied to produce a product, and then the product is doubled. This has an effect of reducing the number of multiplications and thereby improving computational efficiency, when compared with conventional techniques.

The stated object can also be fulfilled by a modular squaring circuit for computing $T = A^2 2^{-n} \bmod N,$ $T$ being a number expressed by a plurality of digits, $A$ and $N$ each being a positive integer made up of a plurality of digits, $n$ being a positive integer where $n \geq L,$ $L$ being a number of bits when the number $N$ is expressed in binary, including: a storage unit storing the numbers

$A$, $N$, and $n$, and a pre-computed number $n'=-N^{-1} \bmod 2^k$, and having an area for storing the number $T$ which is initially set at $0$, $k$ being a number of bits per digit in each of the numbers $A$ and $T$; a multi-precision squaring unit operable to acquire the numbers $A$ and $T$, compute $T+A x a_i$ for a digit $a_i$ of the number $A$, and output a computation result as the number $T$; a multi-precision multiplication unit operable to acquire the number $n'$ and the number $T$ which is output from the multi-precision squaring unit, compute $T+(t_0+n' \bmod 2^k) \times N$ where $t_0$ is a least significant digit of the number $T$, shift a computation result by one digit to the right, and output a shift result as the number $T$; a judgement unit operable to judge whether the computations of the multi-precision squaring unit and the multi-precision multiplication unit have been completed for every digit $a_i$ of the number $A$; a control unit operable to control, if the judgement unit judges in the negative, the multi-precision squaring unit to compute $T+A \times a_i$ using the number $A$ and the number $T$ which is output from the multi-precision multiplication unit and output a computation result as the number $T$, and subsequently control the multi-precision multiplication unit to compute $T+(t_0+n' \bmod 2^k) \times N$, shift a computation result by one digit to the right, and output a shift result as the number $T$; and an output unit operable to perform, if the judgement unit judges in the affirmative, a modular operation on the number $T$ which is output from the multi-precision multiplication unit, and output a result of the modular operation as the number $T$, wherein the multi-precision squaring unit includes: a squaring unit operable to square a digit in one digit place of the number $A$; and a multiplication and doubling unit operable to multiply a digit in one digit place of the number $A$ by a digit in another digit place of the number $A$ to obtain a product, and shift the product by one bit to the left thereby obtaining a result of doubling the product.

According to this construction, the multi-precision squaring unit multiplies two digits in different places of $A$, and then shifts the resulting product by one bit to the left to double the product. This has an effect of reducing the number of multiplications and thereby improving computational efficiency. Also, the doubling of the product can be easily done by just shifting the product to the left.

The stated object can also be fulfilled by a modular squaring circuit for, in a computation of $T+A \times a+N \times m$ where $T$, $A$, and $N$ are each expressed by a plurality of digits, a is a specific digit of the number $A$, and $m$ is a one-digit number, finding a digit $d$ of $T+A \times a+N \times m$ using a product of the number $a$ and one digit of the number $A$ and a product of the number $m$ and one digit of the number $N$, including: a control circuit; a first selection circuit which selects one of the digit of the number $A$ and the digit of the number $N$; a second selection circuit which selects one of the number $a$ and the number $m$; a first register which has an area for storing a one-digit number, and holds $0$ as an initial value; a second register which has an area for storing a three-bit number, and holds $0$ as an initial value; a third register which has an area for storing a number made up of a plurality of digits, according to a digit place of each of the plurality of digits; a multiplication circuit which multiplies the digit selected by the first selection circuit by the number selected by the second selection circuit, thereby obtaining a two-digit product; a shifter which shifts the product obtained by the multiplication circuit by one bit to the left; a third selection circuit which selects one of the product obtained by the multiplication circuit and a shift result obtained by the shifter; and an addition circuit which adds together the number selected by the third selection circuit, the number stored in the first register, the number stored in the second register, and a digit stored in the third register in the same digit place as the digit which is multiplied by the multiplication circuit, to obtain a one-digit sum and a three-bit carry, wherein the first register stores a more significant digit of the number selected by the third selection circuit, after the addition by the addition circuit, the second register stores the carry obtained by the addition circuit, the third register replaces the digit stored in the same digit place as the digit multiplied by the multiplication circuit, with the sum obtained by the addition circuit, the addition circuit (a) computes $T+A \times a$ by repeatedly performing the addition, when the first selection circuit selects each digit of the number $A$ one at a time while the second selection circuit selects the number $a$ each time, and (b) subsequently computes $T+A \times a+N \times m$ by repeatedly performing the addition, when the first selection circuit selects each digit of the number $N$ one at a time while the second selection circuit selects the number $m$ each time, and the control circuit exercises control so as to (a) square a digit in one digit place of the number $A$, and (b) multiply a digit in one digit place of the number $A$ by a digit in another digit place of the number $A$ to form a product, and shift the product by one bit to the left to find a result of doubling the product.

According to this construction, the control circuit exercises control so that two digits in different places of $A$ are multiplied and then the resulting product is shifted by one bit to the left to double the product. This has an effect of reducing the number of multiplications and thereby improving computational efficiency. Also, the doubling of the product can be easily done by just shifting the product to the left.

BRIEF DESCRIPTION OF THE DRAWINGS

These and other objects, advantages and features of the invention will become apparent from the following description thereof taken in conjunction with the accompanying drawings which illustrate a specific embodiment of the invention.

In the drawings:

FIG. 1 is a block diagram showing a construction of a cryptographic communication system to which an embodiment of the present invention relates;

FIG. 2 is a flowchart showing a procedure of computing $T$ by a modular squaring unit in an encryption device shown in FIG. 1;

FIG. 3 is a flowchart showing a detailed operation of a multi-precision multiplication step shown in FIG. 2;

FIG. 4 is a flowchart showing a detailed operation of an output step shown in FIG. 2;

FIG. 5 is a representation of how a squaring operation is performed by hand calculation;

FIG. 6 is a block diagram showing an overall construction of an arithmetic circuit that performs Montgomery squaring of the present invention;

FIG. 7 is a flowchart showing an overall operation of the arithmetic circuit;

FIG. 8 is a flowchart showing a detailed operation of a multi-precision multiplication step shown in FIG. 7;

FIG. 9 is a flowchart showing a detailed operation of an output step shown in FIG. 7;

FIG. 10 is a flowchart showing a detailed operation of computing $T=T+a_i \times a_i \times 2^{jk}$ by the arithmetic circuit;

FIG. 11 is a flowchart showing a detailed operation of computing $T=(T+a_i \times a_j \times 2^{jk})<<1$ by the arithmetic circuit;

FIG. 12 is a flowchart showing a detailed operation of computing $m=t_0 \times n' \mod r$ by the arithmetic circuit;

FIG. 13 is a flowchart showing a detailed operation of computing $T=T+m \times n_g \times 2^{gk}$ by the arithmetic circuit; and

FIG. 14 shows an example of computation by the arithmetic circuit.

DESCRIPTION OF THE PREFERRED EMBODIMENT

The following is a description of a cryptographic communication system 1 which is an embodiment of the present invention.

1. Construction of the Cryptographic Communication System 1

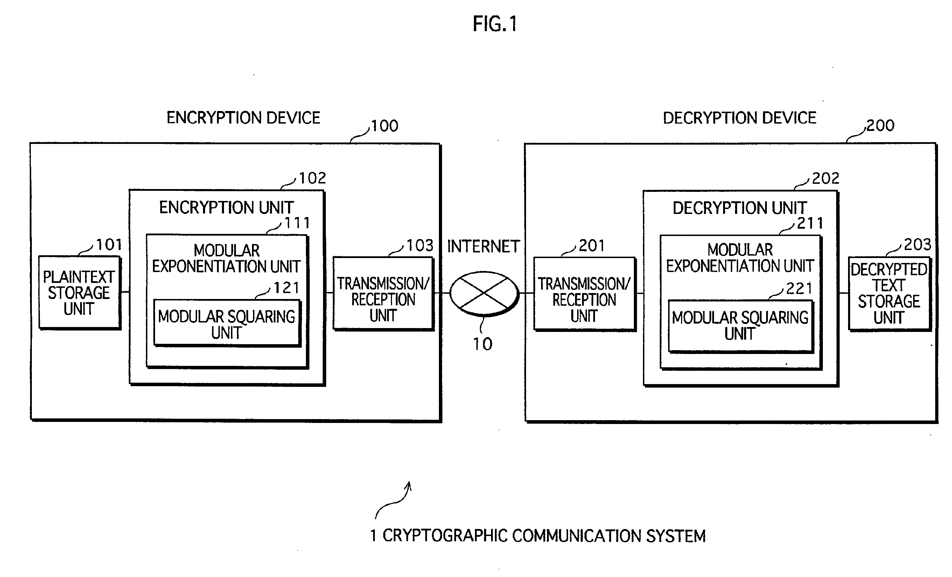

The cryptographic communication system 1 is roughly made up of an encryption device 100 and a decryption device 200, as shown in FIG. 1. The encryption device 100 and the decryption device 200 are connected via the Internet 10. The cryptographic communication system 1 performs secret communication of information through the use of the RSA cryptosystem.

The encryption device 100 includes a plaintext storage unit 101, an encryption unit 102, and a transmission/reception unit 103.

The plaintext storage unit 101 stores plaintext $M$ in advance.

The encryption unit 102 receives encryption key $(E,N)$ from the decryption device 200 and stores it in advance. Encryption key $(E,N)$ is a public key generated by the decryption device 200. The encryption unit 102 encrypts plaintext $M$ using encryption key $(E,N)$, to generate ciphertext $C=M^E \mod N$. The encryption unit 102 transmits ciphertext $C$ to the decryption device 200, via the transmission/reception unit 103 and the Internet 10.

The decryption device 200 includes a transmission/reception unit 201, a decryption unit 202, and a decrypted text storage unit 203.

The decryption unit 202 stores decryption key $(D, N)$ which is a secret key, in advance. The decryption unit 202 receives ciphertext $C$ from the encryption device 100 via the Internet 10 and the transmission/reception unit 201, and decrypts ciphertext $C$ using decryption key $(D, N)$ to generate decrypted text $M=C^D \mod N$. The decryption unit 202 writes decrypted text $M$ to the decrypted text storage unit 203.

Decrypted text $M$ obtained in this way is the same as plaintext $M$.

Each of the encryption device 100 and the decryption device 200 is actually realized by a computer system that is equipped with a microprocessor, a ROM (read only memory), a RAM (random access memory), a hard disk unit, a display unit, a keyboard, a mouse, and a LAN (local area network) connection unit. A computer program is stored in the RAM or the hard disk unit, with the microprocessor operating in accordance with this computer program to achieve the functions of the device.

2. Encryption Unit 102 and Decryption Unit 202

The encryption unit 102 includes a modular exponentiation unit 111. The modular exponentiation unit 111 includes a modular squaring unit 121.

When exponent $E$ is expressed in binary as $e_{n-1}, e_{n-2}, \ldots, e_1, e_0$ ($e_i$ being $0$ or $1$), the modular exponentiation unit 111 performs modular exponentiation $C=M^E \mod N$ according to the aforedescribed binary method, through $n-1$ modular squarings and the number of modular multiplications equivalent to the number of ones in $e_{n-1}, e_{n-2}, \cdots, e_1, e_0$. Here, the modular squarings are performed by the modular squaring unit 121. The modular squaring unit 121 is explained in detail later.

Likewise, the decryption unit 202 includes a modular exponentiation unit 211, and the modular exponentiation unit 211 includes a modular squaring unit 221.

The modular exponentiation unit 211 is the same as the modular exponentiation unit 111, and the modular squaring unit 221 is the same as the modular squaring unit 121. Accordingly, their explanation has been omitted here.

### 3. Modular Squaring Unit 121

The modular squaring unit 121 performs modular squaring using the single-precision Montgomery multiplication algorithm, in the following manner.

In the single-precision Montgomery multiplication algorithm, let $A$, $B$, $N$ be positive integers which are input values (where $0 \leq A < N$, $0 \leq B < N$), and $L$ be the bit length of $N$ written in binary. Here, since this operation is squaring, $A=B$. This being so, for number $n$ such that $n \geq L$, the modular squaring unit 121 outputs $T=AB2^{-n}$ mod $N$. When $A$, $B$, and $N$ are expressed in base $2^k$ with $h$ digits, in general $n=hk$ is chosen. Here, the digits of $A$, $B$, and $N$ are expressed respectively as $a_i$, $b_i$, and $n_i$ ($i=0,...,h-1$ where $0$ represents the least significant digit). In the following explanation, multi-precision variables are written using uppercase alphabetic characters, whereas single-precision variables are written using lowercase alphabetic characters.

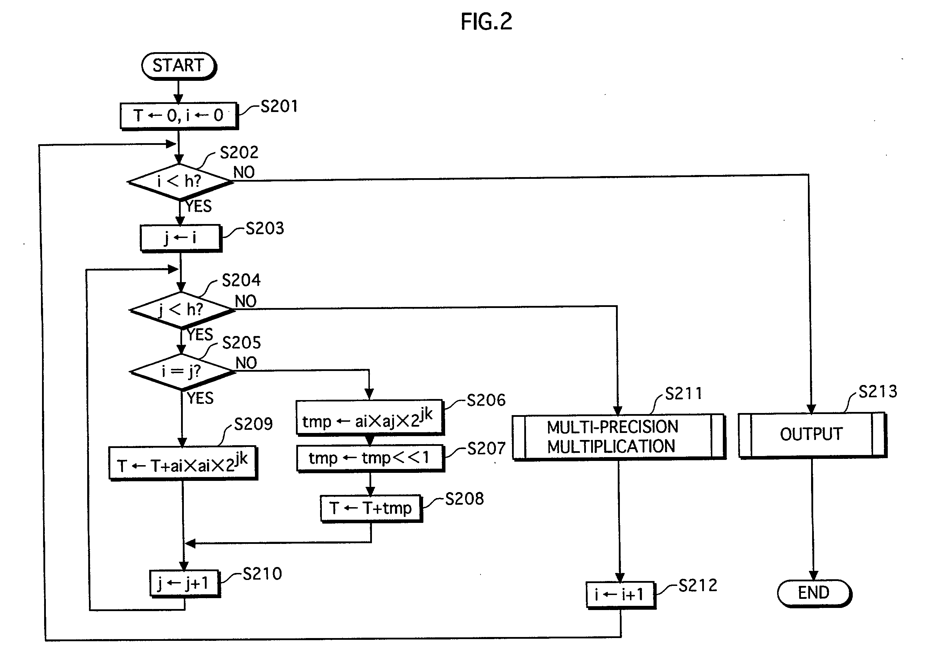

In the single-precision Montgomery multiplication algorithm, the modular squaring unit 121 sets $r=2^k$, and finds $T$ using pre-computed $n'=-N^{-1}$ mod $r$ as shown in FIG. 2.

First, the modular squaring unit 121 assigns $0$ as an initial value, to variable $T$ that will be the final Montgomery computation result. The modular squaring unit 121 also assigns $0$ to variable $i$ that is an index for specifying a digit of $B$ which is subjected to multiplication (S201).

The modular squaring unit 121 judges whether multiplication has been completed for all digits of $A$ and $B$, according to the value of $i$ and the value of $h$. If $i$ is equal to or greater than $h$, the modular squaring unit 121 judges that the multiplication has been completed for all digits of $A$ and $B$ (S202:NO). Accordingly, the modular squaring unit 121 executes an output step (S213), and ends processing.

If $i$ is smaller than $h$ (S202:YES), the modular squaring unit 121 assigns the value of $i$ to variable $j$ that is an index for specifying a digit of $A$ which is subjected to multiplication (S203).

Next, the modular squaring unit 121 judges whether multiplication of single-precision digit $b_i$ in the $i$ th digit place of $B$ and each digit of $A$ has been completed, according to the value of $j$ and the value of $h$. If $j$ is equal to or greater than $h$, the modular squaring unit 121 judges that the multiplication of $b_i$ and each digit of A has been completed (S204:NO). Accordingly, the modular squaring unit 121 executes a multi-precision multiplication step (S211), adds $1$ to variable i (S212), and returns to step S202 to repeat processing.

If $j$ is smaller than $h$ (S204:YES), the modular squaring unit 121 compares $i$ and $j$. If $i$ is equal to $j$ (S205: YES), the modular squaring unit 121 computes $T=T+a_i \times a_i \times 2^{jk}$ (S209).

If $i$ is not equal to $j$ (S205:NO), the modular squaring unit 121 computes temporary variable $tmp=a_i \times a_i \times 2^{jk}$ (S206), shifts $tmp$ by one bit to the left (S207), and computes $T=T+tmp$ (S208).

The modular squaring unit 121 then adds $1$ to variable $j$ (S210), and returns to step S204 to repeat processing.

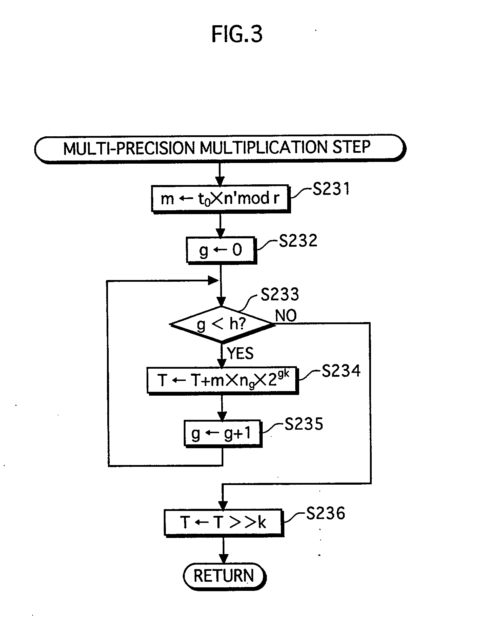

The multi-precision multiplication performed in step S211 is explained in detail below, by referring to FIG. 3.

The modular squaring unit 121 multiplies least significant digit $t_0$ of variable $T$ obtained in the above single-precision multiplication operation, by pre-computed single-precision value n'. The modular squaring unit 121 stores the least significant digit of the resulting product to Montgomery parameter $m$. This is a Montgomery parameter computation step (S231).

Next, the modular squaring unit 121 assigns $0$ to variable $g$ that is an index for specifying a digit of $N$ which is subjected to multiplication (S232).

The modular squaring unit 121 judges whether multiplication of Montgomery parameter $m$ and each digit of $N$ has been completed, according to the value of $g$ and the value of $h$. If $g$ is equal to or greater than $h$ (S233:NO), the modular squaring unit 121 judges that the multiplication of $m$ and each digit of $N$ has been completed. Accordingly, the modular squaring unit 121 shifts $T$ by one digit to the right (S236). This completes the multi-precision multiplication step.

If $g$ is smaller than $h$ (S233:YES), the modular squaring unit 121 performs single-precision multiplication on Montgomery parameter $m$ and input value $n_g$, to find $T=T+m \times n_g \times 2^{gk}$ (S234). The modular squaring unit 121 then adds $1$ to variable $g$, to update digit $n_g$ to be multiplied in the single-precision multiplication of step S234 (S235). After this, the modular squaring unit 121 returns to step S233 to repeat processing.

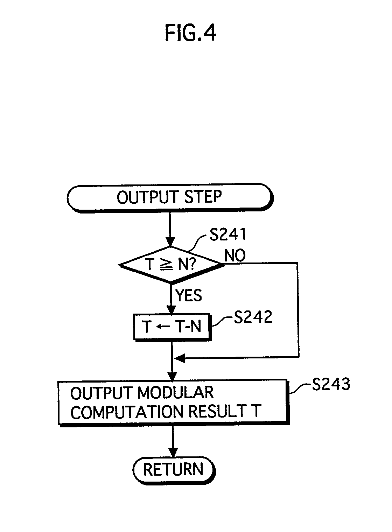

The output performed in step S213 is explained in detail below, by referring to FIG. 4.

The modular squaring unit 121 compares input value $N$ with number $T$. If and only if $T$ is equal to or greater than $N$ (S241:YES), the modular squaring unit 121 subtracts $N$ from $T$ (S242). The modular squaring unit 121 outputs $T$ as the final Montgomery computation result (S243), thereby completing overall processing.

The Montgomery algorithm is described in detail in Peter L. Montgomery (1985) "Modular Multiplication without Trial Division" *Mathematics of Computation,* vol.44, no.170, April 1985, pp.519-521 and A.J. Menezes, P.C. van Oorschot, & S.A. Vanstone (1997) *Handbook of Applied Cryptography,* published by CRC Press, pp.600-603. Accordingly, its detailed explanation has been omitted here.

### 4. Computational Efficiency in Squaring Operations

Computational efficiency in the squaring performed by the modular squaring unit 121 is explained below.

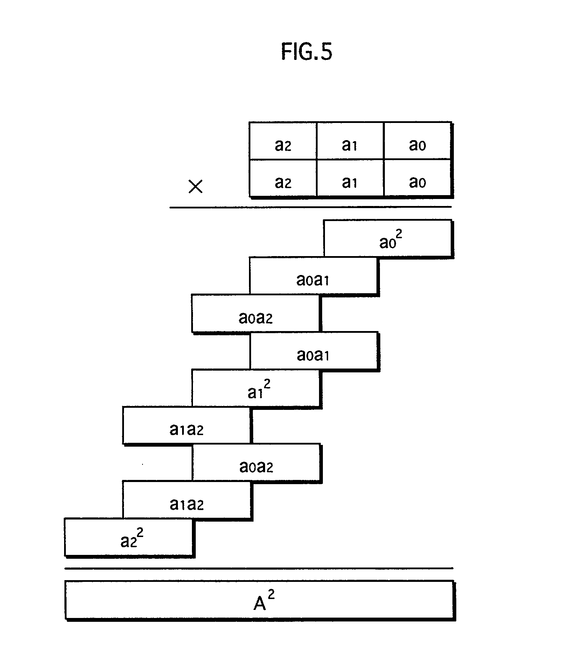

A process of computing square $A^2$ of $3$-digit factor $A=(a_2, a_1, a_0)$ is given as an example, to explain a reduction in the number of multiplications. FIG. 5 is a representation of how this squaring operation is carried out by hand calculation.

As can be seen from the drawing, cross multiplications such as $a_0 \times a_1$ are $a_0 \times a_2$ are repeated twice in hand calculation. Instead of such performing the same multiplication twice, the modular squaring unit 121 doubles the product obtained by one multiplication, thereby dispensing a further multiplication.

Since the doubling can be done just by left shifting of one bit, the doubling does not amount to one multiplication. In the example $3$-digit squaring operation, nine multiplications in total are necessary in hand calculation. However, if the efficient squaring technique of the modular squaring unit 121 that utilizes left shifting is employed, only six multiplications are necessary. Thus, by employing the efficient squaring technique, faster execution times can be achieved.

### 5. Modification to the Modular Squaring Unit 121

The following explains the case where the modular squaring unit 121 is realized as an arithmetic circuit. (1) Construction of an Arithmetic Circuit 300

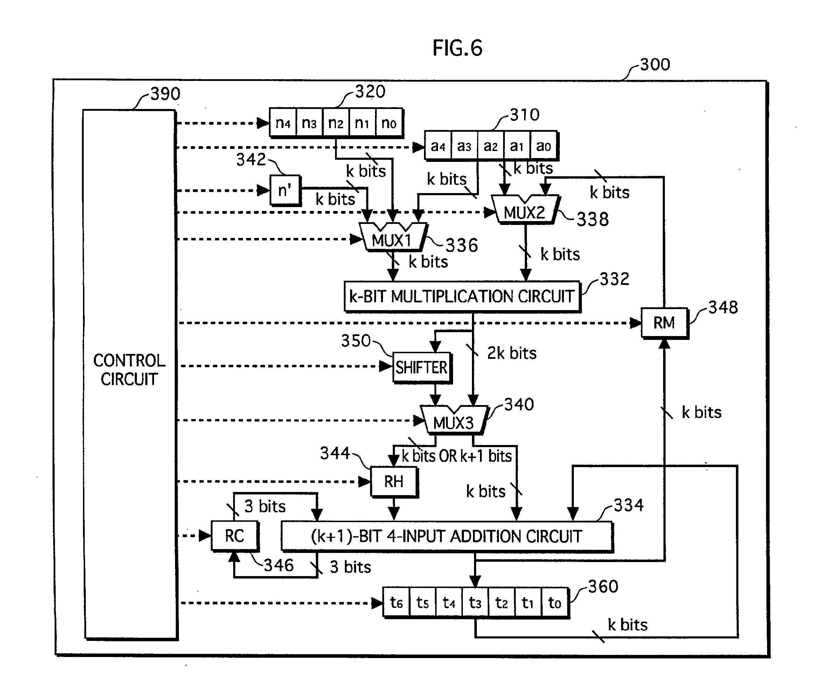

FIG. 6 shows a construction of an arithmetic circuit 300.

The arithmetic circuit 300 is a circuit for executing Montgomery squaring operations. The arithmetic circuit 300 is roughly made up of a register 310, a register 320, a multiplication circuit 332, an addition circuit 334, a multiplexer 336, a multiplexer 338, a multiplexer 340, a register 342, a register 344, a register 346, a register 348, a shifter 350, a register 360, and a control circuit 390.

The arithmetic circuit 300 is actually realized either by an ASIC (application specific integrated circuit) for executing Montgomery squaring operations, or by a processor, a ROM storing a program, and a work RAM. In the latter case, the processor executes the program stored in the ROM, to achieve the function of each construction element. Also, passing of data between the construction elements is done through the RAM and the like.

The register 310 ("A register") stores number $A$ in advance. The register 310 outputs digit $a_i$ of A to the multiplexer 336 ("MUX1") and the multiplexer 338 ("MUX2"), in accordance with a control signal from the control circuit 390.

The register 320 ("N register") stores number $N$ in advance. The register 320 outputs digit $n_i$ of $N$ to the MUX1, in accordance with a control signal from the control circuit 390.

The register 342 stores number $n'$ in advance. The register 342 outputs $n'$ to the MUX1, in accordance with a control signal from the control circuit 390.

The MUX1 selects one of $a_i$, $n_i$, and $n'$ according to a control signal from the control circuit 390, and outputs the selected number to the multiplication circuit 332.

The MUX2 selects $a_i$ or the output of the register 348 according to a control signal from the control circuit 390, and outputs the selected number to the multiplication circuit 332.

The multiplication circuit 332 multiplies the output of the MUX1 and the output of the MUX2 together, to obtain a $2$-digit product. The multiplication circuit 332 outputs the product to the multiplexer 340 and the shifter 350.

The shifter 350 shifts the product by one bit to the left according to a control signal from the control circuit 390, and outputs the shift result to the multiplexer 340.

The multiplexer 340 ("MUX3") selects the product or the output of the shifter 350 according to a control signal from the control circuit 390. The MUX3 outputs the lower order $k$-bit digit of the selected number to the addition circuit 334, and the higher order $k$- or $(k+1)$-bit digit of the selected number to the register 344.

The register 344 ("RH register") stores a higher order digit which was output from the MUX3 in an immediately preceding clock, and outputs it to the addition circuit 334 according to a control signal from the control circuit 390.

The addition circuit 334 adds the output of the register 344, the output of the register 360, and the output of the MUX3, together with a carry which was generated as a result of addition in the immediately preceding clock and has been stored in the register 346. As a result, the addition circuit 334 obtains a $1$-digit sum and a $3$-bit carry. The addition circuit 334 also computes number $m$ in accordance with a procedure which is described later.

The addition circuit 334 is a 4-input addition circuit for adding two $k$-bit input values, one $k$- or $(k+1)$-bit input value, and one $3$-bit carry. As one example, the addition circuit 334 can be realized by connecting three 2-input addition circuits. Since a multiinput addition circuit can be constructed using a well-known conventional technique, its detailed explanation has been omitted here.

The register 346 ("RC register") stores the $3$-bit carry obtained by the addition circuit 334.

The register 360 ("T register") stores the lower $1$-digit sum in an indicated digit place, according to a control signal from the control circuit 390. The register 360 also outputs a digit in an indicated digit place to the addition circuit 334, according to a control signal from the control circuit 390.

The register 348 ("RM register") stores number $m$ calculated by the addition circuit 334.

The control circuit 390 outputs a control signal including a timing clock and a selection signal to each construction element, to effect the above operations.

(2) Operation of the Arithmetic Circuit 300

An operation of the arithmetic circuit 300 is explained below.

(a) Overall Operation of the Arithmetic Circuit 300

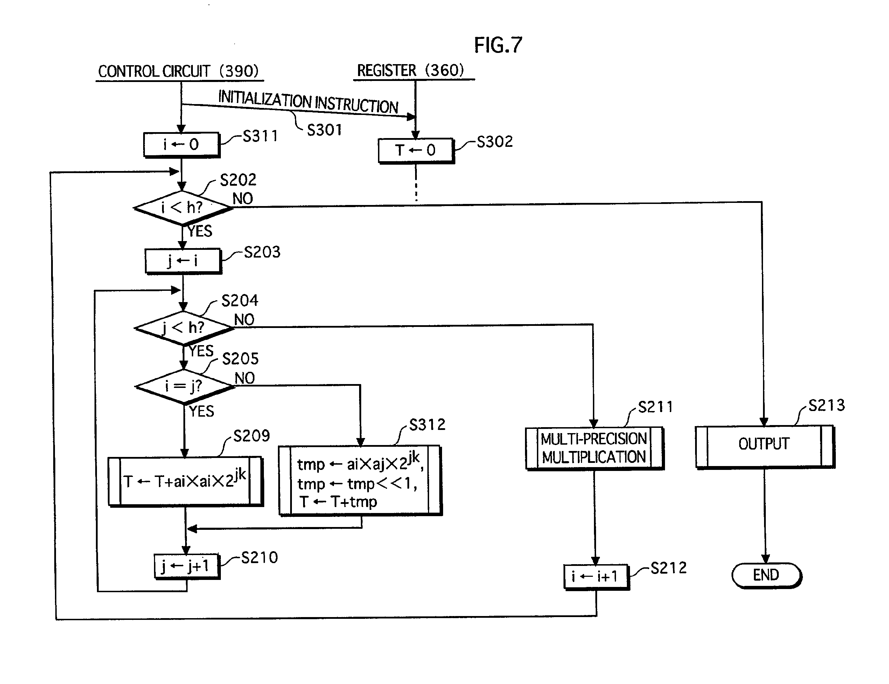

An overall operation of the arithmetic circuit 300 is explained below, by referring to FIG. 7.

Steps which are the same as those in FIG. 2 have been given the same reference numerals and their explanation has been omitted. Note that steps S301, S311, S202-S205, and S212 in FIG. 7 are performed by the control circuit 390.

The control circuit 390 instructs the register 360 to initialize (S301). The register 360 accordingly stores $0$ (S302).

The control circuit 390 assigns $0$ to variable $i$ held inside (S311), and proceeds to step S202.

If the control circuit 390 judges that $i$ is equal to $j$ (S205:YES), the arithmetic circuit 300 computes $T=T+a_i \times a_i \times 2^{jk}$ (S209).

If the control circuit 390 judges that $i$ is not equal to $j$ (S205:NO), the arithmetic circuit 300 computes temporary variable $tmp=a_i \times a_j \times 2^{jk}$, shifts $tmp$ by one bit to the left, and computes $T=T+tmp$ (S312).

In step S211, the arithmetic circuit 300 executes the multi-precision multiplication step.

In step S213, the arithmetic circuit 300 executes the output step.

(b) Multi-Precision Multiplication Step by the Arithmetic Circuit 300

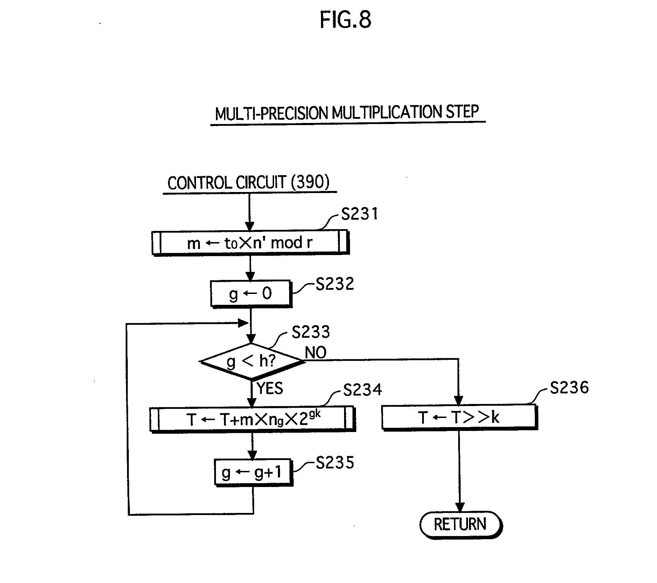

FIG. 8 is a flowchart showing how the arithmetic circuit 300 performs the multi-precision multiplication of step S211 shown in FIG. 7.

Steps which are the same as those in FIG. 3 have been given the same reference numerals and their explanation has been omitted. Note that steps S232, S233, S235, and S236 in FIG. 8 are performed by the control circuit 390.

In step S231, the arithmetic circuit 300 computes $m=t_0 \times n' \bmod r$.

In step S234, the arithmetic circuit 300 computes $T=T+m \times n_g \times 2^{gk}$.

(c) Output Step by the Arithmetic Circuit 300

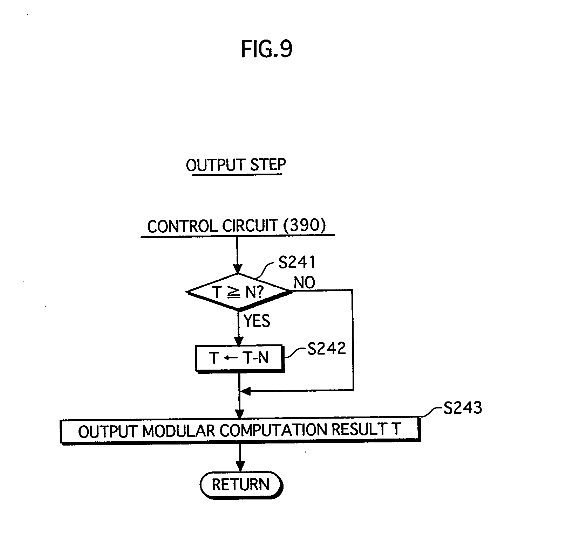

FIG. 9 is a flowchart showing how the arithmetic circuit 300 performs the output of step S213 shown in FIG. 7.

Steps which are the same as those in FIG. 4 have been given the same reference numerals and their explanation has been omitted. Note that each step in FIG. 9 is performed by the control circuit 390.

(d) Computation of $T=T+a_i \times a_i \times 2^{jk}$ by the Arithmetic Circuit 300

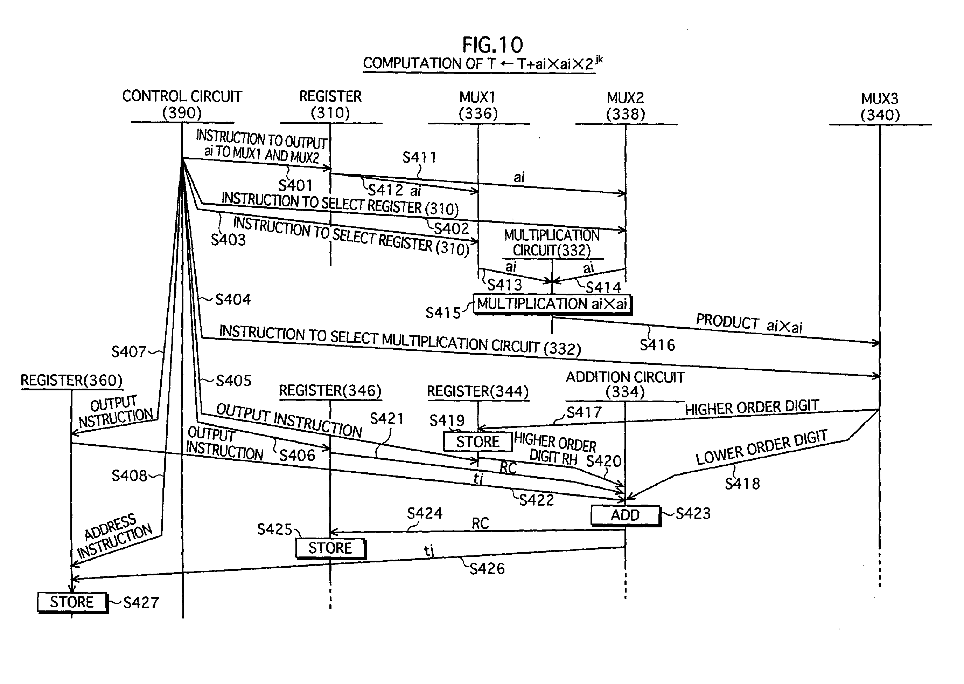

FIG. 10 is a flowchart showing how the arithmetic circuit 300 computes $T=T+a_i \times a_i \times 2^{jk}$ in step S209 shown in FIG. 7.

The control circuit 390 instructs the register 310 to output $a_i$ to the MUX1 and the MUX2 (S401). The control circuit 390 instructs the MUX2 to select the register 310 (S402). The control circuit 390 instructs the MUX1 to select the register 310 (S403). The control circuit 390 instructs the MUX3 to select the multiplication circuit 332 (S404). The control circuit 390 instructs the register 344 to output data (S405). The control circuit 390 instructs the register 346 to output data (S406). The control circuit 390 indicates an address to the register 360, and instructs the register 360 to output data (S407).

The register 310 outputs $a_i$ to the MUX2 (S411) and the MUX1 (S412).

The MUX1 selects and outputs $a_i$ (S413). The MUX2 selects and outputs $a_i$ (S414).

The multiplication circuit 332 performs multiplication $a_i \times a_i$ (S415), and outputs product $a_i \times a_i$ to the MUX3 (S416). The MUX3 selects product $a_i \times a_i$, and outputs the higher order digit of $a_i \times a_i$ to the register 344 (S417). The register 344 stores the higher order digit (S419).

The MUX3 also outputs the lower order digit of $a_i \times a_i$ to the addition circuit 334 (S418). The register 344 outputs data to the addition circuit 334 (S420). The register 346 outputs data to the addition circuit 334 (S421). The register 360 outputs data at the indicated address, to the addition circuit 334 (S422).

The control circuit 390 indicates an address to the register 360 (S408). The addition circuit 334 performs addition (S423), and outputs a carry to the register 346 (S424). The register 346 stores the carry (S425). The addition circuit 334 outputs a sum to the register 360 (S426). The register 360 stores the sum at the indicated address (S427).

(e) Computation of $T=(T+a_i \times a_j \times 2^{jk}) < <1$ by the Arithmetic Circuit 300

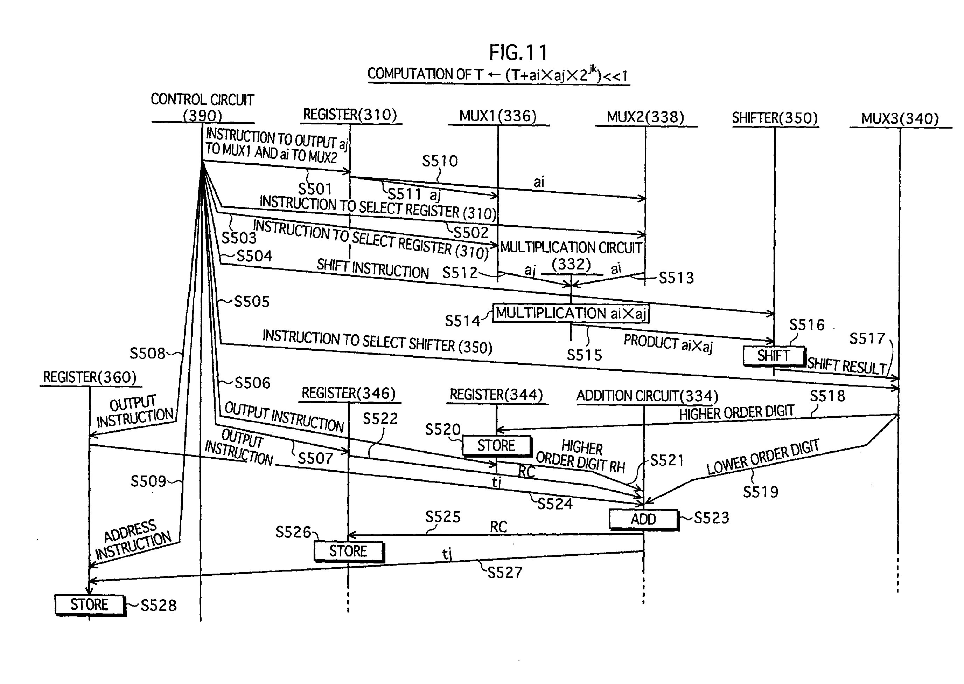

FIG. 11 is a flowchart showing how the arithmetic circuit 300 computes $T=(T+a_i \times a_j \times 2^{jk}) < <1$ in step S312 shown in FIG. 7.

The control circuit 390 instructs the register 310 to output $a_j$ to the MUX1 and $a_i$ to the MUX2 (S501). The control circuit 390 instructs the MUX2 to select the register 310 (S502). The control circuit 390 instructs the MUX1 to select the register 310 (S503). The control circuit 390 instructs the shifter 350 to shift (S504). The control circuit 390 instructs the MUX3 to select the shifter 350 (S505). The control circuit 390 instructs the register 344 to output data (S506). The control circuit 390 instructs the register 346 to output data (S507). The control circuit 390 indicates an address to the register 360, and instructs the register 360 to output data (S508).

The register 310 outputs $a_i$ to the MUX2 (S510), and $a_j$ to the MUX1 (S511).

The MUX1 selects and outputs $a_j$ (S512). The MUX2 selects and outputs $a_i$ (S513).

The multiplication circuit 332 performs multiplication $a_i \times a_j$ (S514), and outputs product $a_i \times a_j$ to the shifter 350 (S515). The shifter 350 shifts product $a_i \times a_j$ (S516), and outputs the shift result to the MUX3 (S517).

The MUX3 selects the shift result, and outputs the higher order digit of the shift result to the register 344 (S518). The register 344 stores the higher order digit (S520).

The MUX3 also outputs the lower order digit of the shift result to the addition circuit 334 (S519). The register 344 outputs data to the addition circuit 334 (S521). The register 346 outputs data to the addition circuit 334 (S522). The register 360 outputs data at the indicated address, to the addition circuit 334 (S524).

The control circuit 390 indicates an address to the register 360 (S509). The addition circuit 334 performs addition (S523), and outputs a carry to the register 346 (S525). The register 346 stores the carry (S526). The addition circuit 334 outputs a sum to the register 360 (S527). The register 360 stores the sum at the indicated address (S528).

( f) Computation of $m = t_0 \times n' \bmod r$ by the Arithmetic Circuit 300

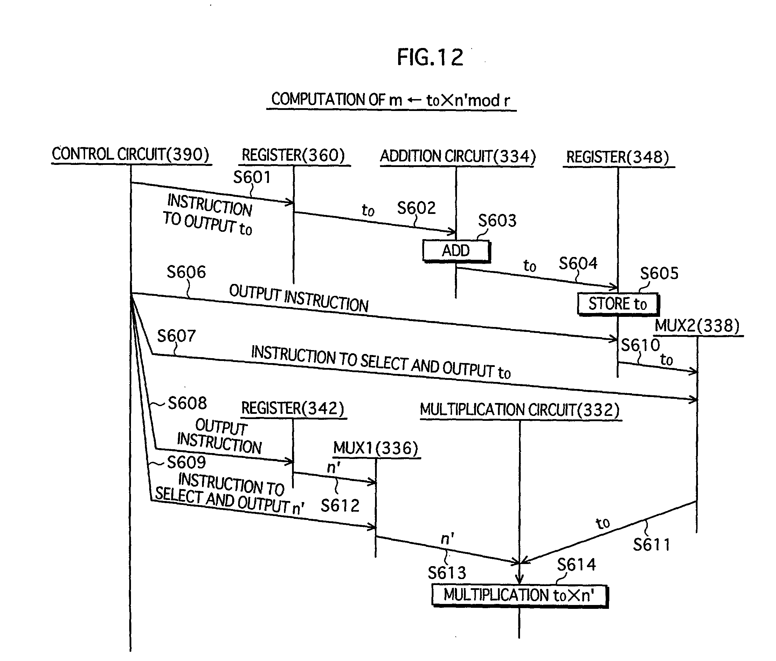

FIG. 12 is a flowchart showing how the arithmetic circuit 300 computes $m = t_0 \times n' \bmod r$ in step S231 shown in FIG. 8.

The control circuit 390 instructs the register 360 to output $t_0$ (S601). The register 360 outputs $t_0$ (S602). The addition circuit 334 performs addition (S603), and outputs $t_0$ to the register 348 (S604). The register 348 stores $t_0$ (S605).

The control circuit 390 instructs the register 348 to output data (S606). The register 348 accordingly outputs $t_0$ to the MUX2 (S610).

The control circuit 390 instructs the MUX2 to select $t_0$ (S607). The MUX2 accordingly outputs $t_0$ to the multiplication circuit 332 (S611).

The control circuit 390 instructs the register 342 to output data (S608). The control circuit 390 instructs the MUX1 to select $n'$ (S609). The register 342 outputs $n'$ (S612). The MUX1 outputs $n'$ to the multiplication circuit 332 (S613). The multiplication circuit 332 performs multiplication $t_0 \times n'$ (S614), and outputs product $t_0 \times n'$ to the addition circuit 334. The addition circuit 334 outputs $t_0 \times n'$ to the register 348. The register 348 stores $t_0 \times n'$.

(g) Computation of $T = T + m \times n_g \times 2^{gk}$ by the Arithmetic Circuit 300

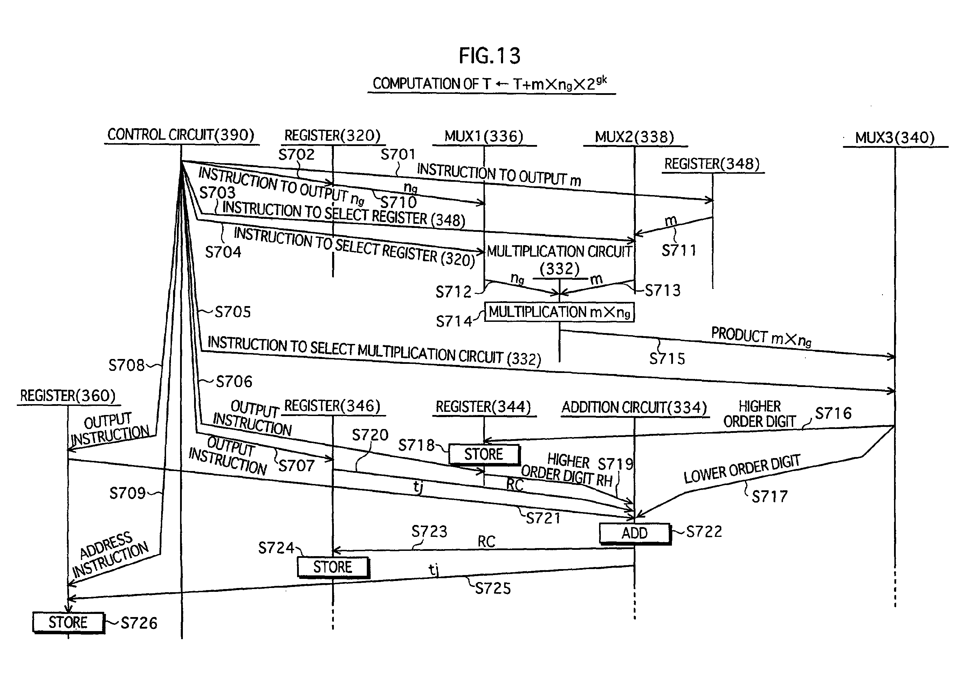

FIG. 13 is a flowchart showing how the arithmetic circuit 300 computes $T = T + m \times n_g \times 2^{gk}$ in step S234 shown in FIG. 8.

The control circuit 390 instructs the register 348 to output $m$ (S701). The control circuit 390 instructs the register 320 to output $n_g$ (S702). The control circuit 390 instructs the MUX2 to select the register 348 (S703). The control circuit 390 instructs the MUX1 to select the register 320 (S704). The control circuit 390 instructs the MUX3 to select the multiplication circuit 332 (S705). The control circuit 390 instructs the register 344 to output data (S706). The control circuit 390 instructs the register 346 to output data (S707). The control circuit 390 indicates an address to the register 360, and instructs the register 360 to output data (S708).

The register 320 outputs $n_g$ to the MuX1 (S710). The register 348 outputs $m$ to the MUX2 (S711).

The MUX1 selects and outputs $n_g$ (S712). The MUX2 selects and outputs $m$ (S713).

The multiplication circuit 332 performs multiplication $m \times n_g$ (S714), and outputs product $m \times n_g$ to the MUX3 (S715).

The MUX3 selects product $m \times n_g$, and outputs the higher order digit of $m \times n_g$ to the register 344 (S716). The register 344 stores the higher order digit (S718).

The MUX3 also outputs the lower order digit of $m \times n_g$ to the addition circuit 334 (S717). The register 344 outputs data to the addition circuit 334 (S719). The register 346 outputs data to the addition circuit 334 (S720). The register 360 outputs data at the indicated address, to the addition circuit 334 (S721).

The control circuit 390 indicates an address to the register 360 (S709). The addition circuit 334 performs addition (S722), and outputs a carry to the register 346 (S723). The register 346 stores the carry (S724). The addition circuit 334 outputs a sum to the register 360 (S725). The register 360 stores the sum at the indicated address (S726).

(3) Example of Computation by the Arithmetic Circuit 300

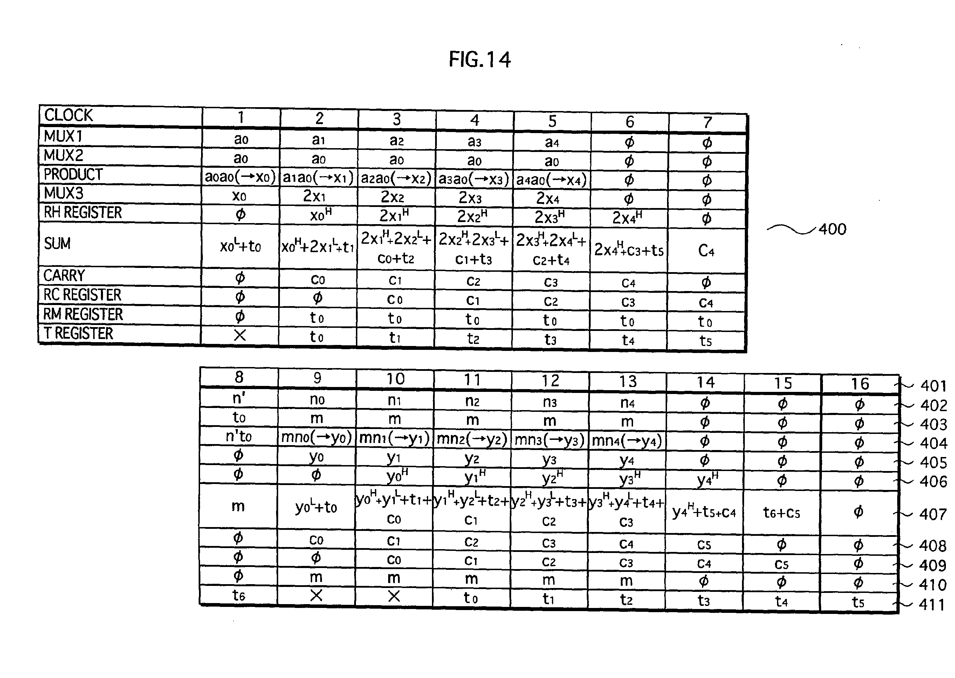

An example of computation by the arithmetic circuit 300 is explained below, by referring to FIG. 14.

In the drawing, table 400 shows a procedure when the arithmetic circuit 300 performs the following computations for one digit $a_0$ of 5-digit number $A$, in one repetition of the above algorithm:

$$T = A \times a_0$$

$$m = t_0 \times n' \bmod r$$

$$T = (T + N \times m)/r$$

In table 400, row 401 shows elapsed time based on timing clock. Row 402 shows output of the MUX1. Row 403 shows output of the MUX2. Row 404 shows a product obtained by the multiplication circuit 332. Row 405 shows output of the MUX3. Row 406 shows the contents of the RH register. Row 407 shows a sum obtained by the addition circuit 334. Row 408 shows a carry obtained by the addition circuit 334. Row 409 shows the contents of the RC register. Row 410 shows the contents of the RM register. Row 411 shows a digit place in the T register in which a sum of an immediately preceding clock is stored. These are shown in units of timing clocks.

In the drawing, $\phi$ denotes the value $0$. This applies hereafter. Also, an expression such as $a_0{\times}b({\rightarrow}x_0)$ denotes assigning the product of $a_0{\times}b$ to $x_0$. This applies hereafter. Also, $\times$ such as that shown as the contents of the T register in clock 1 has the same meaning as $\phi$. It should be noted that $\times$ in an expression such as $a_0{\times}b$ has been omitted such that $a_0b$, for simplicity's sake.

Table 400 is explained in detail below.

(a) From clock 1 to clock 7, the arithmetic circuit 300 computes $T=A{\times}a_0$ and updates the T register using the computation result, in the following way. At the beginning of clock 1, the RH register, the RC register, and the RM register are reset to $\phi$, according to control signals from the control circuit 390.

In clock 1, the MUX1 selects digit $a_0$ stored in the A register and outputs it to the multiplication circuit 332, according to a control signal from the control circuit 390. The MUX2 selects digit $a_0$ stored in the A register and outputs it to the multiplication circuit 332, according to a control signal from the control circuit 390.

The multiplication circuit 332 computes $a_0{\times}a_0$ $({\rightarrow}x_0)$. The T register outputs digit $t_0$ to the addition circuit 334, according to a control signal from the control circuit 390. The addition circuit 334 adds lower order digit $x_0^L$ output from the MUX3, $\phi$ stored in the RH register, and $t_0$ output from the T register, together with $\phi$ stored in the RC register. Hence the addition circuit 334 obtains sum $x_0^L+t_0$.

At the beginning of clock 2, the T register updates digit $t_0$ indicated by a control signal from the control circuit 390, so as to assume the value of sum $x_0^L+t_0$ obtained in clock 1. The RH register stores higher order digit $x_0^H$ output from the MUX3. The RM register stores sum $X_0^L+t_0$.

From clock 2 to clock 5, the same processing is repeated for digits $a_1$, $a_2$, $a_3$, and $a_4$. At the beginning of clock 3 to clock 6, the T register respectively updates digits $t_1$, $t_2$, $t_3$, and $t_4$ so as to assume the values of the sums obtained in clock 2 to clock 5 respectively.

In clock 6, the MUX1 outputs $\phi$ to the multiplication circuit 332, according to a control signal from the control circuit 390 for suppressing output. The multiplication circuit 332 computes product $\phi$. The T register outputs $t_5$ to the addition circuit 334, according to a control signal from the control circuit 390. The addition circuit 334 adds lower order digit $\phi$ output from the MUX3, higher order digit $2x_4^H$ which was output from the MUX3 in clock 5 and is stored in the RH register, and $t_5$ output form the T register, together with carry $c_3$ which was generated in clock 5 and is stored in the RC register. Hence the addition circuit 334 obtains sum $2x_4^H+t_5+c_3$ and carry $c_4$.

At the beginning of clock 7, the T register updates digit $t_5$ indicated by a control signal from the control circuit 390, so as to assume the value of sum $2x_4^H+t_5+c_3$ obtained in clock 6. Also, the RC register stores carry $c_4$, whereas the RH register stores higher order digit $\phi$ which was output from the MUX3 in clock 6.

In clock 7, the multiplication circuit 332 computes product $\phi$ again. The T register outputs $\phi$ to the addition circuit 334. The addition circuit 334 computes sum $c_4$.

At the beginning of clock 8, the T register updates digit $t_6$ indicated by a control signal from the control circuit 390, so as to assume the value of sum $c_4$ obtained in clock 7.

As a result of the above processing, the T register is updated to store computation result $T+A{\times}a_0$.

(b) In clock 8, the arithmetic circuit 300 computes $m=t_0{\times}n'\ mod\ r$ and updates the RM register using the computation result, in the following manner.

In clock 8, the MUX1 selects number $n'$ stored in the register 342 and outputs it to the multiplication circuit 332, according to a control signal from the control circuit 390. The MUX2 selects $t_0$ stored in the RM register and outputs it to the multiplication circuit 332, according to a control signal from the control circuit 390.

The multiplication circuit 332 performs multiplication $n'{\times}t_0$. The addition circuit 334 computes sum $m$ which is the lower order digit of product $n'{\times}t_0$ output from the MUX3.

At the beginning of clock 9, the RM register stores $m$.

(c) From clock 9 to clock 15, the arithmetic circuit 300 computes $T=T+N{\times}m$ and updates the T register using the computation result, in the following manner.

In clock 9, the MUX1 selects digit $n_0$ stored in the N register and outputs it to the multiplication circuit 332, according to a control signal from the control circuit 390. The MUX2 selects number $m$ stored in the RM register and outputs it to the multiplication circuit 332, according to a control signal from the control circuit 390.

The multiplication circuit 332 performs multiplication $m{\times}n_0({\rightarrow}y_0)$.

The T register outputs digit $t_0$ to the addition circuit 334, according to a control signal from the control circuit 390. The addition circuit 334 adds lower order digit $y_0^L$ output from the MUX3, $\phi$ stored in the RH register, and $t_0$ output from the T register, together with $\phi$ stored in the RC register. Thus, the addition circuit 334 obtains sum $y_0^L + t_0$ and carry $c_0$.

At the beginning of clock 10, the RC register stores carry $c_0$, whereas the RH register stores higher order digit $y_0^H$ of the product obtained in clock 9. Meanwhile, the T register does not store the sum obtained in clock 9.

From clock 10 to clock 13, the same processing is repeated for digits $n_1$, $n_2$, $n_3$, and $n_4$. At the beginning of clock 11 to clock 14, the T register updates digits $t_0$, $t_1$, $t_2$, and $t_3$ so as to assume the values of the sums obtained in clock 10 to clock 13 respectively.

In clock 14, the MUX1 outputs $\phi$ to the multiplication circuit 332, according to a control signal from the control circuit 390 for suppressing output. The multiplication circuit 332 computes product $\phi$. The T register outputs $t_5$ to the addition circuit 334, according to a control signal from the control circuit 390. The addition circuit 334 adds lower order digit $\phi$ output from the MUX3, higher order digit $y_4^H$ which was output from the MUX3 in clock 13 and is stored in the RH register, and digit $t_5$ output from the T register, together with carry $c_4$ which was generated in clock 13 and is stored in the RC register. Thus, the addition circuit 334 obtains sum $y_4^H + t_5 + c_4$ and carry $c_5$.

At the beginning of clock 15, the T register updates digit $t_4$ indicated by a control signal from the control circuit 390, so as to assume the value of sum $y_4^H + t_5 + c_4$ obtained in clock 14. Also, the RC register stores carry $c_5$, whereas the RH register stores higher order digit $\phi$ which was output from the MUX3 in clock 14.

In clock 15, the multiplication circuit 332 computes product $\phi$ again. The T register outputs $\phi$ to the addition circuit 334. The addition circuit 334 computes sum $t_6 + c_5$.

At the beginning of clock 16, the T register updates digit $t_5$ indicated by a control signal from the control circuit 390, so as to assume the value of sum $t_6 + c_5$ obtained in clock 15.

As a result of the above processing, the T register is updated to store computation result $T + A \times a_0 + N \times m$.

6. Conclusion

According to the above embodiment, the result of a single-precision multiplication is doubled to reduce the number of multiplications. This enables faster execution times to be achieved when compared with the conventional Montgomery multiplication algorithm.

Take a modular squaring operation of *1024* bits with the processing unit being *32* bits, as one example.

Here, the number of digits of a multi-precision value is *32*.

When the conventional multi-precision Montgomery multiplication algorithm is used, 2080 single-precision multiplications are necessary. When the conventional single-precision Montgomery multiplication algorithm is used, 2112 single-precision multiplications are necessary. When the single-precision Montgomery squaring algorithm of the present invention is used, on the other hand, only 1616 single-precision multiplications are necessary. Thus, the single-precision Montgomery squaring of the present invention, that applies the efficient squaring technique to the single-precision Montgomery multiplication algorithm, delivers fastest execution times.

Also, the single-precision Montgomery squaring is similar to the single-precision Montgomery multiplication, and therefore does not require special computation steps and the like. The single-precision Montgomery squaring can be realized just by adding a step of setting an initial value and a shift step of doubling a single-precision value.

Squaring operations are frequently performed in modular exponentiation which is used for the RSA cryptosystem and the like. Accordingly, faster squaring operations greatly contribute to speedups of overall encryption processing.

Also, an arithmetic circuit for executing the above computation algorithm can be realized by providing a left shifter circuit for doubling an output value at the output unit of a multiplication circuit. In this way, the single-precision Montgomery multiplication and the single-precision Montgomery squaring can be performed using one arithmetic circuit. The size of the shifter circuit is relatively small, whilst the shifter circuit contributes to faster encryption processing. Therefore, the provision of the shifter circuit brings about significant advantages.

The present invention has been described by way of the above embodiment, though it should be obvious that the invention is not limited to above. Example modifications are given below.

(1) The above embodiment describes the case where the present invention is applied to a cryptographic communication system for communicating information in secrecy. However, the present invention can also be applied to other systems such as authentication and nonrepudiation. Since these systems use cryptographic techniques too, the same applications as the above embodiment are possible.

The authentication system and the nonrepudiation system are cryptography-utilizing systems which are used for purposes such as: ensuring that a transferred message has been sent by a party claiming to have sent the message, that the message has not been tampered, that an individual has access rights to data or a facility, and that the individual is who he or she claims to be, as well as protecting against false denial of consent.

The use of cryptographic techniques in the authentication system and the nonrepudiation system are well known, so that its explanation has been omitted here.

(2) The present invention also applies to the aforedescribed method. This method may be realized by a computer program that is executed by a computer. Such a computer program may be distributed as a digital signal.

The present invention may be realized by a computer-readable storage medium, such as a flexible disk, a hard disk, a CD-ROM (compact disk - read only memory), an MO (magneto-optical), a DVD (digital versatile disk), a DVD-ROM, a DVD-RAM, or a semiconductor memory, on which the computer program or digital signal mentioned above is recorded. Conversely, the present invention may also be realized by the computer program or digital signal that is recorded on a storage medium.

The computer program or digital signal that achieves the present invention may also be transmitted via a network, such as an electronic communication network, a wired or wireless communication network, or the Internet.

The present invention can also be realized by a computer system that includes a microprocessor and a memory. In this case, the computer program can be stored in the memory, with the microprocessor operating in accordance with this computer program.

The computer program or digital signal may be provided to an independent computer system by distributing a storage medium on which the computer program or digital signal is recorded, or by transmitting the computer program or digital signal via a network. The independent computer system may then execute the computer program or digital signal to function as the present invention.

(3) The limitations described in the embodiment and the modifications may be freely combined.

Although the present invention has been fully described by way of examples with reference to the accompanying drawings, it is to be noted that various changes and modifications will be apparent to those skilled in the art.

Therefore, unless such changes and modifications depart from the scope of the present invention, they should be construed as being included therein.

**Claims**

1. A modular squaring circuit for performing modular squaring on a number, comprising:

a multiplication unit operable to multiply a digit in one digit place of the number by a digit in another digit place of the number, thereby obtaining a product; and
a doubling unit operable to double the product.

2. A modular squaring circuit for performing modular squaring on a number that is expressed by $n$ digits, $n$ being an integer no smaller than $2$, comprising:

a squaring unit operable to square each of the $n$ digits of the number, thereby obtaining $n$ squares;
a multiplication unit operable to multiply, for each of the $n$ digits of the number, the digit by each more significant digit of the number, thereby obtaining $(n^2-n)/2$ products;
a doubling unit operable to double each of the $(n^2-n)/2$ products, thereby obtaining $(n^2-n)/2$ double values; and
a computation unit operable to add the $n$ squares and the $(n^2-n)/2$ double values together for corresponding digit places, thereby obtaining a modular square of the number.

3. A modular squaring circuit for computing $T=A^2 2^{-n}$ mod $N$, $T$ being a number expressed by a plurality of digits, $A$ and $N$ each being a positive integer made up of a plurality of digits, $n$ being a positive integer where $n \geq L$, $L$ being a number of bits when the number $N$ is expressed in binary, comprising:

a storage unit storing the numbers $A$, $N$, and $n$, and a pre-computed number $n'=-N^{-1}$ mod $2^k$, and having an area for storing the number $T$ which is initially set at $0$, $k$ being a number of bits per digit in each of the numbers $A$ and $T$;
a multi-precision squaring unit operable to acquire the numbers $A$ and $T$, compute $T+A x a_i$ for a digit $a_i$ of the number $A$, and output a computation result as the number $T$;
a multi-precision multiplication unit operable to acquire the number $n'$ and the number $T$ which is output from the multi-precision squaring unit, compute $T+(t_0+n'$ mod $2^k) \times N$ where $t_0$ is a least significant digit of the number $T$, shift a computation result by one digit to the right, and output a shift result as the number $T$;
a judgement unit operable to judge whether the computations of the multi-precision squaring unit and the multi-precision multiplication unit have been completed for every digit $a_i$ of the number $A$;
a control unit operable to control, if the judgement unit judges in the negative, the multi-precision squaring unit to compute $T+A \times a_i$ using the number $A$ and the number $T$ which is output from the multi-precision multiplication unit and output a computation result as the number $T$, and subsequently control the multi-precision multiplication unit to compute $T+(t_0+n' \bmod 2^k) \times N$, shift a computation result by one digit to the right, and output a shift result as the number $T$; and

an output unit operable to perform, if the judgement unit judges in the affirmative, a modular operation on the number $T$ which is output from the multi-precision multiplication unit, and output a result of the modular operation as the number $T$,

wherein the multi-precision squaring unit includes:

a squaring unit operable to square a digit in one digit place of the number $A$; and
a multiplication and doubling unit operable to multiply a digit in one digit place of the number $A$ by a digit in another digit place of the number $A$ to obtain a product, and shift the product by one bit to the left thereby obtaining a result of doubling the product.

4. A modular squaring circuit for, in a computation of $T+A \times a+N \times m$ where $T$, $A$, and $N$ are each expressed by a plurality of digits, $a$ is a specific digit of the number $A$, and $m$ is a one-digit number, finding a digit $d$ of $T+A \times a+N \times m$ using a product of the number $a$ and one digit of the number $A$ and a product of the number $m$ and one digit of the number $N$, comprising:

a control circuit;
a first selection circuit which selects one of the digit of the number $A$ and the digit of the number $N$;
a second selection circuit which selects one of the number a and the number $m$;
a first register which has an area for storing a one-digit number, and holds $0$ as an initial value;
a second register which has an area for storing a three-bit number, and holds $0$ as an initial value;
a third register which has an area for storing a number made up of a plurality of digits, according to a digit place of each of the plurality of digits;
a multiplication circuit which multiplies the digit selected by the first selection circuit by the number selected by the second selection circuit, thereby obtaining a two-digit product;
a shifter which shifts the product obtained by the multiplication circuit by one bit to the left;
a third selection circuit which selects one of the product obtained by the multiplication circuit and a shift result obtained by the shifter; and
an addition circuit which adds together the number selected by the third selection circuit, the number stored in the first register, the number stored in the second register, and a digit stored in the third register in the same digit place as the digit which is multiplied by the multiplication circuit, to obtain a one-digit sum and a three-bit carry,

wherein the first register stores a more significant digit of the number selected by the third selection circuit, after the addition by the addition circuit,

the second register stores the carry obtained by the addition circuit,
the third register replaces the digit stored in the same digit place as the digit multiplied by the multiplication circuit, with the sum obtained by the addition circuit,
the addition circuit (a) computes $T+A \times a$ by repeatedly performing the addition, when the first selection circuit selects each digit of the number $A$ one at a time while the second selection circuit selects the number $a$ each time, and (b) subsequently computes $T+A \times a+N \times m$ by repeatedly performing the addition, when the first selection circuit selects each digit of the number $N$ one at a time while the second selection circuit selects the number $m$ each time, and
the control circuit exercises control so as to (a) square a digit in one digit place of the number $A$, and (b) multiply a digit in one digit place of the number $A$ by a digit in another digit place of the number $A$ to form a product, and shift the product by one bit to the left to find a result of doubling the product.

5. The modular squaring circuit of Claim 4, wherein each digit is expressed by $k$ bits where $k$ is a positive integer,

the first register stores the number expressed by $k$ bits,
the multiplication circuit multiplies the $k$-bit digit selected by the first selection circuit by the $k$-bit number selected by the second selection circuit, to obtain the $2k$-bit product, and
the addition circuit adds together a less significant $k$-bit digit of the number selected by the third selection circuit, the $k$-bit number stored in the first register, the three-bit number stored in the second register, and the $k$-bit digit stored in the third register, to obtain the $k$-bit sum and the three-bit carry.

6. A modular squaring method for use in a modular squaring circuit for computing $T=A^2 2^{-n} \bmod N$, $T$ being a number expressed by a plurality of digits, $A$ and $N$ each being a positive integer made up of a plurality of digits, $n$ being a positive integer where $n \geq L$, $L$ being a number of bits when the number $N$ is expressed in binary, the modular squaring circuit including a storage unit which (a) stores the numbers $A$, $N$, and $n$, and a pre-computed number $n'=-N^{-1} \bmod 2^k$, and (b) has an area for storing the number $T$ that is initially set at $0$, $k$ being a number of bits per digit in each of the numbers $A$ and $T$, the modular squaring method comprising:

a multi-precision squaring step of acquiring the numbers $A$ and $T$, computing $T+A \times a_i$ for a digit $a_i$ of the number $A$, and outputting a computation result as the number $T$;

a multi-precision multiplication step of acquiring the number $n'$ and the number $T$ which is output in the multi-precision squaring step, computing $T+(t_0+n' \bmod 2^k) \times N$ where $t_0$ is a least significant digit of the number $T$, shifting a computation result by one digit to the right, and outputting a shift result as the number $T$;

a judgement step of judging whether the computations of the multi-precision squaring step and the multi-precision multiplication step have been completed for every digit $a_i$ of the number $A$;

a control step of controlling, if the judgement step judges in the negative, so that the multi-precision squaring step is executed to compute $T+A \times a_i$ using the number $A$ and the number $T$ which is output in the multi-precision multiplication step and output a computation result as the number $T$, and subsequently the multi-precision multiplication step is executed to compute $T+(t_0+n' \bmod 2^k) \times N$, shift a computation result by one digit to the right, and output a shift result as the number $T$; and

an output step of performing, if the judgement step judges in the affirmative, a modular operation on the number $T$ which is output in the multi-precision multiplication step, and outputting a result of the modular operation as the number $T$,

wherein the multi-precision squaring step includes:

a squaring step of squaring a digit in one digit place of the number $A$; and
a multiplication and doubling step of multiplying a digit in one digit place of the number $A$ by a digit in another digit place of the number $A$ to obtain a product, and shifting the product by one bit to the left to obtain a result of doubling the product.

**7.** A modular squaring program for use in a computer for computing $T=A^2 2^{-n} \bmod N$, $T$ being a number expressed by a plurality of digits, $A$ and $N$ each being a positive integer made up of a plurality of digits, $n$ being a positive integer where $n \geq L$, $L$ being a number of bits when the number $N$ is expressed in binary, the computer including a storage unit which (a) stores the numbers $A$, $N$, and $n$, and a pre-computed number $n'=-N^{-1} \bmod 2^k$, and (b) has an area for storing the number $T$ that is initially set at $0$, $k$ being a number of bits per digit in each of the numbers $A$ and $T$, the modular squaring program comprising:

a multi-precision squaring step of acquiring the numbers $A$ and $T$, computing $T+A \times a_i$ for a digit $a_i$ of the number $A$, and outputting a computation result as the number $T$;

a multi-precision multiplication step of acquiring the number $n'$ and the number $T$ which is output in the multi-precision squaring step, computing $T+(t_0+n' \bmod 2^k) \times N$ where $t_0$ is a least significant digit of the number $T$, shifting a computation result by one digit to the right, and outputting a shift result as the number $T$;

a judgement step of judging whether the computations of the multi-precision squaring step and the multi-precision multiplication step have been completed for every digit $a_i$ of the number $A$;

a control step of controlling, if the judgement step judges in the negative, so that the multi-precision squaring step is executed to compute $T+A \times a_i$ using the number $A$ and the number $T$ which is output in the multi-precision multiplication step and output a computation result as the number $T$, and subsequently the multi-precision multiplication step is executed to compute $T+(t_0+n' \bmod 2^k) \times N$, shift a computation result by one digit to the right, and output a shift result as the number $T$; and

an output step of performing, if the judgement step judges in the affirmative, a modular operation on the number $T$ which is output in the multi-precision multiplication step, and outputting a result of the modular operation as the number $T$,

wherein the multi-precision squaring step includes:

a squaring step of squaring a digit in one digit place of the number $A$; and
a multiplication and doubling step of multiplying a digit in one digit place of the number $A$ by a digit in another digit place of the number $A$ to obtain a product, and shifting the product by one bit to the left to obtain a result of doubling the product.

8. A computer-readable storage medium storing a modular squaring program for use in a computer for computing $T=A^2 2^{-n} \bmod N$, $T$ being a number expressed by a plurality of digits, $A$ and $N$ each being a positive integer made up of a plurality of digits, $n$ being a positive integer where $n \geq L$, $L$ being a number of bits when the number $N$ is expressed in binary, the computer including a storage unit which (a) stores the numbers $A$, $N$, and $n$, and a pre-computed number $n' = -N^{-1} \bmod 2^k$, and (b) has an area for storing the number $T$ that is initially set at $0$, $k$ being a number of bits per digit in each of the numbers $A$ and $T$, the modular squaring program comprising:

a multi-precision squaring step of acquiring the numbers $A$ and $T$, computing $T+A \times a_i$ for a digit $a_i$ of the number $A$, and outputting a computation result as the number $T$;

a multi-precision multiplication step of acquiring the number $n'$ and the number $T$ which is output in the multi-precision squaring step, computing $T+(t_0+n' \bmod 2^k) \times N$ where $t_0$ is a least significant digit of the number $T$, shifting a computation result by one digit to the right, and outputting a shift result as the number $T$;

a judgement step of judging whether the computations of the multi-precision squaring step and the multi-precision multiplication step have been completed for every digit $a_i$ of the number $A$;

a control step of controlling, if the judgement step judges in the negative, so that the multi-precision squaring step is executed to compute $T+A \times a_i$ using the number $A$ and the number $T$ which is output in the multi-precision multiplication step and output a computation result as the number $T$, and subsequently the multi-precision multiplication step is executed to compute $T+(t_0+n' \bmod 2^k) \times N$, shift a computation result by one digit to the right, and output a shift result as the number $T$; and

an output step of performing, if the judgement step judges in the affirmative, a modular operation on the number $T$ which is output in the multi-precision multiplication step, and outputting a result of the modular operation as the number $T$,

wherein the multi-precision squaring step includes:

a squaring step of squaring a digit in one digit place of the number $A$; and
a multiplication and doubling step of multiplying a digit in one digit place of the number $A$ by a digit in another digit place of the number $A$ to obtain a product, and shifting the product by one bit to the left to obtain a result of doubling the product.

9. A secret communication system including an encryption device and a decryption device, the encryption device encrypting plaintext to generate ciphertext according to a public key cipher and transmitting the ciphertext, the decryption device receiving the ciphertext and decrypting the ciphertext to obtain decrypted text according to the public key cipher, the public key cipher utilizing modular exponentiation,

wherein each of the encryption device and the decryption device includes the modular squaring circuit of Claim 1, and performs modular exponentiation using the modular squaring circuit.

10. An encryption device for encrypting plaintext to generate ciphertext according to a public key cipher that utilizes modular exponentiation, comprising:

the modular squaring circuit of Claim 1, which is used to perform modular exponentiation.

11. A decryption device for receiving the ciphertext generated by the encryption device of Claim 10, and decrypting the ciphertext according to the public key cipher to obtain decrypted text, comprising:

the modular squaring circuit of Claim 1, which is used to perform modular exponentiation.

# FIG.1

1 CRYPTOGRAPHIC COMMUNICATION SYSTEM

EP 1 306 748 A2

# FIG.2

START

$T \leftarrow 0, i \leftarrow 0$ —S201

S202 —
$i < h?$ NO

YES

$j \leftarrow i$ —S203

S204 —
$j < h?$ NO

YES S205 —
$i = j?$ NO

tmp $\leftarrow$ ai$\times$aj$\times 2^{jk}$ —S206

tmp $\leftarrow$ tmp$<<$1 —S207

$T \leftarrow$ T+tmp —S208

S209
$T \leftarrow$ T+ai$\times$ai$\times 2^{jk}$

$j \leftarrow j+1$ —S210

MULTI-PRECISION MULTIPLICATION —S211

$i \leftarrow i+1$ —S212

OUTPUT —S213

END

EP 1 306 748 A2

## FIG.3

```
┌───────────────────────────────────────────┐
│      MULTI-PRECISION MULTIPLICATION STEP      │
└───────────────────────────────────────────┘
                      │
                      ▼
        ┌─────────────────────────┐
        │   m ← t₀×n'mod r         │─── S231
        └─────────────────────────┘
                      │
                      ▼
             ┌──────────────┐
             │   g ← 0       │─── S232
             └──────────────┘
                      │
                      ▼
              ╱──────────╲            S233
             ╱   g < h?    ╲──── NO
             ╲             ╱
              ╲──────────╱
                   │ YES
                   ▼
        ┌─────────────────────────┐
        │   T ← T+m×n_g×2^{gk}      │─── S234
        └─────────────────────────┘
                   │
                   ▼
             ┌──────────────┐
             │   g ← g+1     │─── S235
             └──────────────┘
                   │
                   ▼
        ┌─────────────────────────┐
        │   T ← T >> k             │─── S236
        └─────────────────────────┘
                   │
                   ▼
              ( RETURN )
```

- $m \leftarrow t_0 \times n' \bmod r$ — S231
- $g \leftarrow 0$ — S232
- $g < h?$ — S233
- $T \leftarrow T + m \times n_g \times 2^{gk}$ — S234
- $g \leftarrow g+1$ — S235
- $T \leftarrow T >> k$ — S236

EP 1 306 748 A2

# FIG.4

```
         ┌─────────────────┐
         │   OUTPUT STEP   │
         └─────────────────┘
                  │
                  ▼        ╱ S241
              ╱───────╲      NO
             ╱  T ≧ N? ╲─────────────┐
             ╲─────────╱             │
                  │                  │
                 YES                 │
                  ▼        ╱ S242    │
            ┌───────────┐            │
            │  T ← T-N  │            │
            └───────────┘            │
                  │                  │
                  ▼◄─────────────────┘
       ┌──────────────────────┐  ─S243
       │  OUTPUT MODULAR      │
       │  COMPUTATION RESULT T │
       └──────────────────────┘
                  │
                  ▼
            ╭──────────╮
            │  RETURN  │
            ╰──────────╯
```

# FIG.5

EP 1 306 748 A2

$$
\begin{array}{|c|c|c|}
\hline
a_2 & a_1 & a_0 \\
\hline
a_2 & a_1 & a_0 \\
\hline
\end{array}
$$

$\times$

$a_0^2$

$a_0 a_1$

$a_0 a_2$

$a_0 a_1$

$a_1^2$

$a_1 a_2$

$a_0 a_2$

$a_1 a_2$

$a_2^2$

$A^2$

FIG.6

FIG.7

CONTROL CIRCUIT (390)

REGISTER (360)

INITIALIZATION INSTRUCTION

S301

S302: T ← 0

S311: i ← 0

S202: i < h? NO / YES

S203: j ← i

S204: j < h? NO / YES

S205: i = j? NO / YES

S209: T ← T+ai×ai×2$^{jk}$

S312: tmp ← ai×aj×2$^{jk}$, tmp ← tmp<<1, T ← T+tmp

S210: j ← j+1

S211: MULTI-PRECISION MULTIPLICATION

S212: i ← i+1

S213: OUTPUT

END

# FIG.8

EP 1 306 748 A2

MULTI-PRECISION MULTIPLICATION STEP

CONTROL CIRCUIT (390)

S231
$$m \leftarrow t_0 \times n' \bmod r$$

S232
$$g \leftarrow 0$$

S233
$$g < h?$$

NO

YES

S234
$$T \leftarrow T + m \times n_g \times 2^{gk}$$

S236
$$T \leftarrow T >> k$$

S235
$$g \leftarrow g+1$$

RETURN

# FIG.9

OUTPUT STEP

CONTROL CIRCUIT (390)

S241

T ≧ N? — NO

YES

T ← T-N — S242

OUTPUT MODULAR COMPUTATION RESULT T — S243

( RETURN )

# FIG.10

COMPUTATION OF $T \leftarrow T + ai \times ai \times 2^{jk}$

EP 1 306 748 A2

# FIG.11

COMPUTATION OF T ← (T+ai×aj×$2^{jk}$)<<1

EP 1 306 748 A2

## FIG.12

COMPUTATION OF $m \leftarrow t_0 \times n' \bmod r$

CONTROL CIRCUIT(390)   REGISTER(360)   ADDITION CIRCUIT(334)   REGISTER(348)

S601 — INSTRUCTION TO OUTPUT $t_0$

$t_0$ S602

S603 ADD

$t_0$ S604

S605 STORE $t_0$

S606 OUTPUT INSTRUCTION

MUX2(338)

S610 $t_0$

S607 INSTRUCTION TO SELECT AND OUTPUT $t_0$

S608 REGISTER(342)   MULTIPLICATION CIRCUIT(332)

OUTPUT INSTRUCTION

MUX1(336)

S609 INSTRUCTION TO SELECT AND OUTPUT $n'$

$n'$ S612

$t_0$ S611

$n'$ S613   S614

MULTIPLICATION $t_0 \times n'$

EP 1 306 748 A2

# FIG.13

COMPUTATION OF T ← T+m×$n_g$×$2^{gk}$

EP 1 306 748 A2

FIG.14

| CLOCK | 1 | 2 | 3 | 4 | 5 | 6 | 7 |
|---|---|---|---|---|---|---|---|
| MUX1 | $a_0$ | $a_1$ | $a_2$ | $a_3$ | $a_4$ | $\phi$ | $\phi$ |
| MUX2 | $a_0$ | $a_0$ | $a_0$ | $a_0$ | $a_0$ | $\phi$ | $\phi$ |
| PRODUCT | $a_0a_0(\rightarrow x_0)$ | $a_1a_0(\rightarrow x_1)$ | $a_2a_0(\rightarrow x_2)$ | $a_3a_0(\rightarrow x_3)$ | $a_4a_0(\rightarrow x_4)$ | $\phi$ | $\phi$ |
| MUX3 | $x_0$ | $2x_1$ | $2x_2$ | $2x_3$ | $2x_4$ | $\phi$ | $\phi$ |
| RH REGISTER | $\phi$ | $x_0^H$ | $2x_1^H$ | $2x_2^H$ | $2x_3^H$ | $2x_4^H$ | $\phi$ |
| SUM | $x_0^L+t_0$ | $x_0^H+2x_1^L+t_1$ | $2x_1^H+2x_2^L+c_0+t_2$ | $2x_2^H+2x_3^L+c_1+t_3$ | $2x_3^H+2x_4^L+c_2+t_4$ | $2x_4^H+c_3+t_5$ | $C_4$ |
| CARRY | $\phi$ | $c_0$ | $c_1$ | $c_2$ | $c_3$ | $c_4$ | $\phi$ |
| RC REGISTER | $\phi$ | $\phi$ | $c_0$ | $c_1$ | $c_2$ | $c_3$ | $c_4$ |
| RM REGISTER | $\phi$ | $t_0$ | $t_0$ | $t_0$ | $t_0$ | $t_0$ | $t_0$ |
| T REGISTER | $\times$ | $t_0$ | $t_1$ | $t_2$ | $t_3$ | $t_4$ | $t_5$ |

~400

| 8 | 9 | 10 | 11 | 12 | 13 | 14 | 15 | 16 | |
|---|---|---|---|---|---|---|---|---|---|
| $n'$ | $n_0$ | $n_1$ | $n_2$ | $n_3$ | $n_4$ | $\phi$ | $\phi$ | $\phi$ | ~401 |
| $t_0$ | $m$ | $m$ | $m$ | $m$ | $m$ | $\phi$ | $\phi$ | $\phi$ | ~402 |
| $n't_0$ | $mn_0(\rightarrow y_0)$ | $mn_1(\rightarrow y_1)$ | $mn_2(\rightarrow y_2)$ | $mn_3(\rightarrow y_3)$ | $mn_4(\rightarrow y_4)$ | $\phi$ | $\phi$ | $\phi$ | ~403 |
| $\phi$ | $y_0$ | $y_1$ | $y_2$ | $y_3$ | $y_4$ | $\phi$ | $\phi$ | $\phi$ | ~404 |
| $\phi$ | $\phi$ | $y_0^H$ | $y_1^H$ | $y_2^H$ | $y_3^H$ | $y_4^H$ | $\phi$ | $\phi$ | ~405 |
| $m$ | $y_0^L+t_0$ | $y_0^H+y_1^L+t_1+c_0$ | $y_1^H+y_2^L+t_2+c_1$ | $y_2^H+y_3^L+t_3+c_2$ | $y_3^H+y_4^L+t_4+c_3$ | $y_4^H+t_5+c_4$ | $t_6+c_5$ | $\phi$ | ~406 |
| $\phi$ | $c_0$ | $c_1$ | $c_2$ | $c_3$ | $c_4$ | $c_5$ | $\phi$ | $\phi$ | ~407 |
| $\phi$ | $\phi$ | $c_0$ | $c_1$ | $c_2$ | $c_3$ | $c_4$ | $c_5$ | $\phi$ | ~408 |
| $\phi$ | $m$ | $m$ | $m$ | $m$ | $m$ | $\phi$ | $\phi$ | $\phi$ | ~409 |
| $t_6$ | $\times$ | $\times$ | $t_0$ | $t_1$ | $t_2$ | $t_3$ | $t_4$ | $t_5$ | ~410, 411 |